# EUROPÄISCHE PATENTSCHRIFT

(11) **EP 1 864 721 B1**
(45) Veröffentlichungstag und Bekanntmachung des Hinweises auf die Patenterteilung: **11.11.2009**
(21) Anmeldenummer: 07010967.3
(22) Anmeldetag: 04.06.2007
(51) Int. Cl.: B05B 17/06, B65D 83/00

(54) **Volumetrisch arbeitendes Dosierventil**
Volumetric metering valve
Soupape de dosage volumétrique

(30) Priorität: 07.06.2006 DE 202006008930 U
(43) Veröffentlichungstag der Anmeldung: 12.12.2007
(73) Patentinhaber: Vermes Technik GmbH & Co. KG, 67065 Ludwigshafen (DE)
(72) Erfinder: Reinold, Udo, 82538 Geretsried (DE); Radushev, Georgi, 83607 Holzkirchen (DE); Fließ, Mario, 83607 Holzkirchen (DE)
(74) Vertreter: Feldkamp, Rainer

(56) Entgegenhaltungen:
- DE-A1- 3 202 275
- DE-A1- 10 153 708
- DE-C- 831 966
- DE-U1- 20 206 161
- US-A1- 2004 195 938

## Beschreibung

Die Erfindung betrifft ein volumetrisch arbeitendes Dosierventil zum berührungslosen Dosieren von Medien entsprechend dem Oberbegriff des Anspruchs 1.

Bei bekannten Dosierventilen dieser Bauart besteht, ebenso wie bei anderen bekannten Ventilen, die über eine Zeit-Druck-Steuerung oder nach dem Stößel-Düsen-Prinzip arbeiten, ein Problem, wenn die zu dosierenden Medien mit abrasiven Partikeln gefüllt sind oder aggressive Medien enthalten. Stößel-Düsen-Systeme erzeugen aufgrund der Tatsache, dass ein Stößel zum Dosieren in eine Düsenblende einschlägt, einen hohen Abrieb, wenn die Medien mit festen Partikeln gefüllt sind.

Zeit-Druck-Systeme ermöglichen zwar eine dauerhafte Dosierung auch von abrasiv gefüllten Medien, jedoch ist eine punktgenaue, berührungslose Dosierung nur mit sehr großen Drücken möglich und deshalb unzweckmäßig und unwirtschaftlich.

Bei den bekannten volumetrischen Verdrängungen ergeben sich aufgrund des Druckunterschiedes, der zum berührungslosen Ausstoß des Mediums aus der Düse erforderlich ist, schwerwiegende Probleme an der Dichtstelle, beispielsweise zwischen Kolben und Zylinder, die mit den abrasiven Partikeln in Berührung gelangen. Weiterhin problematisch ist bei volumetrisch arbeitenden Dosiersystemen die berührungslose Dosierung von definierten Kleinstmengen, da die zum Ausstoßen erforderliche Kraft nur schwer innerhalb der erforderlichen Zeitspanne und Genauigkeit angelegt und auch wieder abgenommen werden kann.

Der vorliegenden Erfindung liegt daher die Aufgabe zugrunde, ein volumetrisch arbeitendes Dosierventil zu schaffen, das berührungslos definierte Volumina unterschiedlicher Viskosität genau auch in kleinsten Mengen dosieren kann und durch das auch Medien ohne Beschädigung der Funktionsteile verarbeitet werden können, die mit abrasiven Partikeln gefüllt sind oder aggressive Bestandteile enthalten.

Gelöst wird die gestellte Aufgabe durch die im Kennzeichnungsteil des Anspruchs 1 angegebenen Merkmale. Durch die Erfindung wird erreicht, dass eine Trennung der empfindlichen feinmechanischen Antriebsteile von der zu dosierenden Flüssigkeit über einen Puffer vorgenommen wird, der die erforderliche periodische, zeitgerechte Drucksteuerung überträgt, die Dosiermedien jedoch auf einen Bereich beschränkt, der die Ausströmdüse mit Vorratsbehälter umfasst. Dieser als Kartusche ausgebildete Vorratsbehälter kann als Verschleißteil ersetzt werden. Die empfindlichen Antriebselemente des Ventils können somit nicht beschädigt werden. Das Pufferfluid wird nach jedem Hub über ein gesteuertes Ventil aus einem Vorratsbehälter um das Volumen des abgegebenen Dosiermediums ergänzt.

Das Pufferfluid übt eine schmierende Wirkung auf die beweglichen Teile aus. Die Stellbewegung des als Piezoaktor ausgebildeten Stellgliedes bewirkt eine Vergrößerung oder Verkleinerung des Pufferfluidbereichs, und diese Änderung wirkt sich über den Trennkolben auf den Dosierbereich und dadurch auch auf das Dosiermedium selbst aus. Die so erzeugte über den Puffer geleitete Druckänderung wird zum Ausstoßen des Dosiermediums aus der Düse benutzt. Durch die hohe Leistungsdichte im piezo-elektrischen Aktor sind schnelle Pulsfolgen mit gleichzeitig hohen Drücken möglich.

Gemäß dem Anspruch 3 ist das Verdrängerorgan als Membran ausgebildet. Ein Ventiltrieb, bei dem ein Piezoaktor eine Membran betätigt, die ihrerseits auf eine Hydraulikflüssigkeit einwirkt, ist aus der DE 202 06 161 U1 bekannt. Hierbei wird jedoch die Hydraulikflüssigkeit nicht im Sinne einer Dosierung aus einer Ventilöffnung ausgegeben, sondern wirkt auf einen federnd abgestützten Ventilstößel ein, der ein Ventil von seinem Sitz abhebt.

Es ist aus der DE 831 966 bereits eine Vorrichtung bekannt, bei der ein Verbrauchsmittel (Farbe) über einen Kolben aus einem Auslauf gedrückt wird, wobei der Kolben durch Wasser belastet wird, das über eine Luftpumpe unter Druck gesetzt wird. Hierdurch soll verhindert werden, dass die Farbe auch nach langer Zeit nicht eintrocknet und frisch zur Verfügung steht. Eine feinfühlige Dosierung und ein Schutz des Auslaufventils sind hier jedoch weder beabsichtigt noch nötig.

Es ist ferner durch die DE 32 02 275 A1 ein Abgabebehälter für kosmetische Zubereitungen bekannt, bei dem das Füllgut über einen pneumatisch durch Hand betätigten Kolben ausgetrieben wird. Eine genaue Mikrodosierung über einen Piezoaktor ist auch hier weder möglich noch nötig.

Ferner ist durch die DE 199 46 830 A1 ein Kraftstoff-Einspritzventil bekannt, das durch einen Piezoaktor betätigt wird und bei dem zwischen Aktor und Ventilkörper eine Hydraulikkammer angeordnet ist, die eine hydraulische Übersetzung bewirkt. Dadurch soll eine Leckmenge aus einem Hochdruckbereich in einen Niederdruckbereich des Ventils bei Temperaturänderungen wenigstens annähernd konstant gehalten werden. Auch hier wird zwar ein piezo-elektrischer Aktor zur Ventilbetätigung benutzt, hinsichtlich Aufgabe und Lösung ist diese Anordnung mit der Erfindung jedoch nicht vergleichbar.

Die DE 195 39 020 A1 betrifft eine Pumpe zur Förderung gasförmiger oder flüssiger Medien mit einem piezo-elektrischen Aktor. Jedoch wirkt dieser unmittelbar ohne Puffermedium auf den Inhalt der Pumpenkammer ein.

Ausgestaltungen der Erfindung ergeben sich aus den Unteransprüchen und der folgenden Beispielsbeschreibung.

Nachstehend wird ein Ausführungsbeispiel der Erfindung anhand der Zeichnung beschrieben. Die Zeichnung zeigt in einer Schnittansicht schematisch den prinzipiellen Aufbau des Ventils in drei verschiedenen Betriebsstellungen:

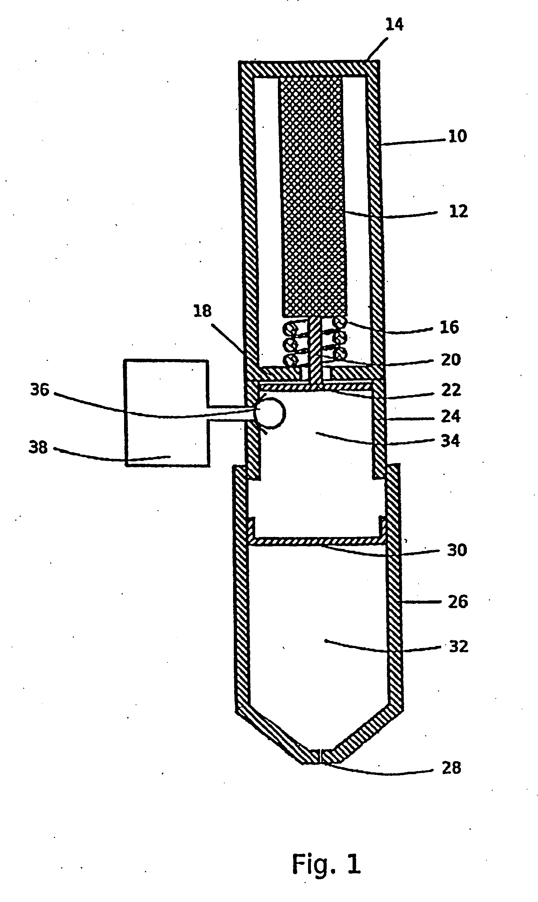

Fig. 1 zeigt das Ventil im Ausgangszustand;
Fig. 2 zeigt das Ventil mit ausgelenkter Membran;

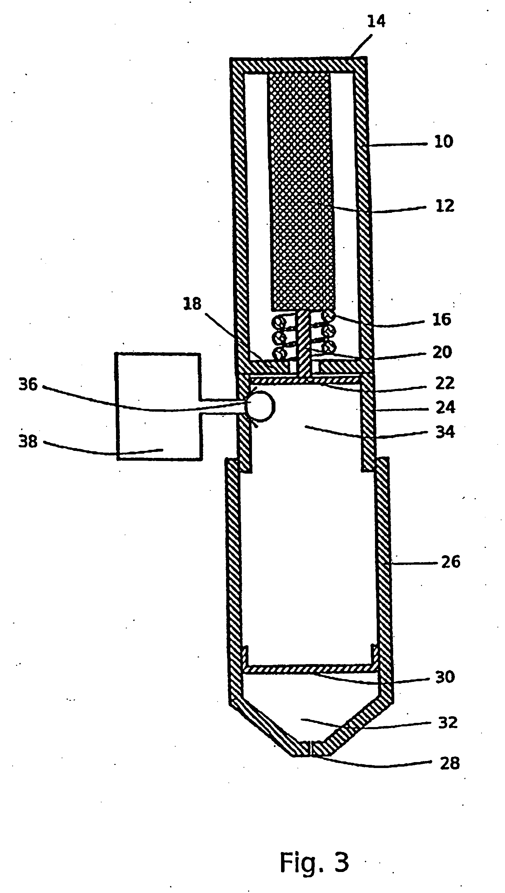

Fig. 3 zeigt das Ventil im Endzustand.

In einem Gehäuse 10 ist ein piezo-elektrischer Aktor 12 angeordnet, der einerseits an einer Stirnwand 14 und andererseits über eine Vorspannfeder 16 an der der Stirnwand 14 gegenüberliegenden Stirnwand 18 des Gehäuses 10 abgestützt ist. Ein vom Piezoaktor 12 betätigtes Koppelglied 20 steht durch eine Öffnung der Stirnwand 18 hindurch und wirkt auf ein Verdrängerorgan, das gemäß dem Ausführungsbeispiel als Membran 22 ausgebildet ist und gegenüber einer Zylinderwand 24 abgedichtet ist, auf der eine Kartusche 26 auswechselbar, beispielsweise über ein Gewinde, festlegbar ist. Die Kartusche 26 weist eine Düsenöffnung 28 zum dosierten Ausstoßen des Mediums auf. In der zylindrischen Kartusche 26 ist ein Kolben 30 verschiebbar, der auf das in der Kartusche befindliche Dosiermedium 32 wirkt. Der zwischen dem Kolben 30 und der Membran 22 befindliche Raum ist von einem im Wesentlichen inkompressiblen Pufferfluid 34 ausgefüllt und über ein Ventil 36 aus einem Behälter 38 automatisch beim Rückhub des Verdrängerorgans nachfüllbar.

### Das Ventil arbeitet wie folgt:

Der Piezoaktor 12 bewirkt bei seinem Streckhub eine Auslenkung der Membran 22, die das Pufferfluid 34 verdrängt und den Kolben 30 verschiebt, wodurch ein vorbestimmter Volumenanteil des Dosiermediums 32 aus der Düse 28 ausgestoßen wird. Während des Rückhubes des Piezoaktors 12 bzw. der Membran 22 erfolgt aus dem Vorratsbehälter 38 über das Ventil 36 eine Nachfüllung des Pufferfluids. Dieses Ventil 36 wird automatisch in Abhängigkeit von der Bewegung der Membran 22 gesteuert, wobei ein Rücklauf des Kolbens 30 verhindert ist.

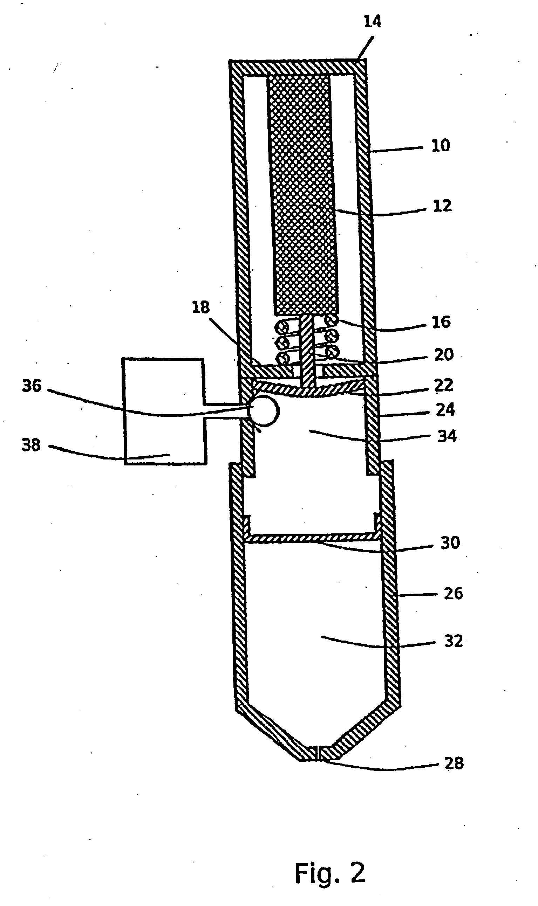

Die Auslenkung der Membran 22 durch den Piezoaktor 12 ist aus Fig. 2 ersichtlich. Der vorbeschriebene Dosiervorgang setzt sich fort, bis die Kartusche 26 leer ist.

Diese kann dann wieder aufgefüllt oder durch eine neue ersetzt werden, falls durch abrasive Teilchen des Dosiermediums eine Beschädigung aufgetreten ist. Die Kartusche 26 ist als Verschleißteil ausgebildet, der auf einfache Weise ersetzt werden kann. Durch das Puffermedium wird verhindert, dass die mit abrasiven Partikeln angefüllte Dosierflüssigkeit mit anderen Teilen der Dosiervorrichtung in Berührung gelangt und diese beschädigt.

### Bezugszeichenliste

- 10: Gehäuse
- 12: Piezoaktor
- 14: Stirnwand
- 16: Vorspannfeder
- 18: Stirnwand
- 20: Koppelglied
- 22: Membran
- 24: Zylinderwand
- 26: Kartusche
- 28: Düsenöffnung
- 30: Kolben
- 32: Dosiermedium
- 34: Pufferfluid
- 36: Ventil
- 38: Vorratsbehälter

## Patentansprüche

1. Volumetrisch arbeitendes Dosierventil, insbesondere für abrasive Medien (32), bei dem ein als Piezoaktor (12) ausgebildetes Stellglied über ein Verdrängerorgan (22) auf das Dosiermedium (32) einwirkt, das aus einer Düsenöffnung (28) dosiert abgegeben wird,
**dadurch gekennzeichnet, dass** zwischen dem Verdrängerorgan (22) und dem Dosiermedium (32) ein Fluidpuffer (34) eingeschaltet ist, der von dem Dosiermedium (32) durch einen beim Dosiervorgang verschobenen Kolben (30) getrennt ist und das Dosiermedium (32) in einer am Ventilgehäuse (10) auswechselbar festlegbaren Kartusche (26) untergebracht ist, die die Düsenöffnung (28) aufweist und dass das Pufferfluid (34) aus einem Vorratsbehälter (38) über ein Ventil (36) nachfüllbar ist.

2. Dosierventil nach Anspruch 1,
**dadurch gekennzeichnet, dass** das Ventil (36) in Abhängigkeit von der Bewegung des Piezoaktors (12) derart steuerbar ist, dass das Pufferfluid (34) beim Rückhub des Verdrängerorgans (22) automatisch das Pufferfluid (34) nachfüllt.

3. Dosierventil nach Anspruch 1,
**dadurch gekennzeichnet, dass** das Verdrängerorgan als Membran (22) ausgebildet ist.

4. Dosierventil nach Anspruch 1,
**dadurch gekennzeichnet, dass** die Kartusche (26) den Kolben (30) aufweist, der eine Trennung zwischen Dosiermedium (32) und Pufferfluid (34) bewirkt.

## Claims

1. A volumetrically operating metering valve, in particular for abrasive media (32), in which a control member in the form of a piezoactuator (12) acts by way of a displacement member (22) on the medium to be metered (32) which is discharged in metered form from a nozzle opening (28),
**characterised in that** disposed between the displacement member (22) and the medium (32) to be metered is a fluid buffer (34) which is separated from the medium (32) to be metered by a piston (30) which is displaced in the metering operation and the medium (32) to be metered is disposed in a cartridge (26) which can be interchangeably fixed to the valve housing (10) and which has the nozzle opening (28) and that the buffer fluid (34) can be refilled from a storage container (38) by way of a valve (36).

2. A metering valve according to claim 1 **characterised in that** the valve (36) is controllable in dependence on the movement of the piezoactuator (12) in such a way that the buffer fluid (34) automatically refills the buffer fluid (34) in the return stroke of the displacement member(22).

3. A metering valve according to claim 1 **characterised in that** the displacement member is in the form of a diaphragm (22).

4. A metering valve according to claim 1 **characterised in that** the cartridge (26) has the piston (30) which provides separation between the medium (32) to be metered and the bufferfluid (34).

## Revendications

1. Soupape de dosage volumétrique, en particulier pour des produits abrasifs (32), selon laquelle un organe d'actionnement réalisé sous forme d'actionneur piézoélectrique (12) agit par l'intermédiaire d'un organe refouleur (22) sur le produit à doser (32), qui est délivré de manière dosée par une ouverture de buse (28),
**caractérisée en ce qu'**un tampon de fluide (34) est intercalé entre l'organe refouleur (22) et le produit à doser (32), tampon qui est séparé du produit à doser (32) par un piston (30) déplacé lors du processus de dosage, et le produit à doser (32) est logé dans une cartouche (26) pouvant être fixée de manière interchangeable sur le boîtier de soupape (10), cartouche qui présente l'ouverture de buse (28),
et **en ce que** le fluide tampon (34) peut être rechargé à partir d'un réservoir de stockage (38) par l'intermédiaire d'une soupape (36).

2. Soupape de dosage selon la revendication 1, **caractérisée en ce que** la soupape (36) peut être commandée, en fonction du déplacement de l'actionneur piézoélectrique (12), de telle sorte que le fluide tampon (34) recharge automatiquement le fluide tampon (34) lors de la course de retour de l'organe refouleur (22).

3. Soupape de dosage selon la revendication 1, **caractérisée en ce que** l'organe refouleur est réalisé sous forme de membrane (22).

4. Soupape de dosage selon la revendication 1, **caractérisée en ce que** la cartouche (26) présente le piston (30), qui produit une séparation entre le produit à doser (32) et le fluide tampon (34).
